# EUROPEAN PATENT APPLICATION

(11) **EP 4 220 781 A1**
(43) Date of publication of application: **02.08.2023**
(21) Application number: 21872548.9
(22) Date of filing: 24.09.2021
(51) Int. Cl.: H01M 4/86, H01M 8/10

(54) **ELECTRODE CATALYST LAYER AND MEMBRANE ELECTRODE ASSEMBLY**

(30) Priority: 23.09.2020 JP 2020158762
(71) Applicant: TOPPAN INC., Tokyo 110-0016 (JP)
(72) Inventor: HAMADA, Naoki, Tokyo 110-0016 (JP)
(74) Representative: Hoffmann Eitle
(86) International application number: PCT/JP2021/035022
(87) International publication number: WO 2022/065419

(57) **Abstract**

It is an object to provide an electrode catalyst layer that suppresses degradation due to repeated starting and stopping and has excellent durability, and a membrane electrode assembly using the electrode catalyst layer. The electrode catalyst layer (3) is an electrode catalyst layer used in a polymer fuel electrolyte fuel cell (1), which contains carbon particles which support catalyst (11), a polymer electrolyte (12), and a fiber material which is at least one of a carbon fiber (13) and an organic electrolyte fiber (14), and the thickness of the electrode catalyst layer (3) after performing a start-stop test from 1 V to 1.5 V for 10,000 cycles is 70% or more of the thickness of the electrode catalyst layer (3) before the start-stop test.

## Description

### [Technical Field]

The present invention generally relates to an electrode catalyst layer of a polymer electrolyte fuel cell and a membrane electrode assembly using the electrode catalyst layer.

### [Background Art]

A polymer electrolyte fuel cell has a structure in which a polymer electrolyte membrane is sandwiched between a cathode electrode catalyst layer and an anode electrode catalyst layer. Polymer electrolyte fuel cells with such a structure are expected to be used as power sources for automobiles and stationary power sources because of their advantages of operating at room temperature and short start-up time.

In particular, when polymer electrolyte fuel cells are used as power sources for automobiles, durability is required so that frequent starting and stopping (potential change) will not lead to performance degradation.

Conventional electrode catalyst layers are formed, for example, of carbon particles which support catalyst, and a polymer electrolyte. However, the carbon particles used in the conventional electrode catalyst layer are prone to corrosion due to repeated starting and stopping, resulting in a decrease in the film thickness of the electrode catalyst layer and a decrease in durability.

In order to solve the above problem, in PTL 1, the durability of the electrode catalyst layer is improved by heat-treating the carbon particles. However, this method results in a problem of reduced initial performance.

On the other hand, in PTL 2, the durability against starting and stopping is improved by making the anode catalyst layer thinner than the cathode catalyst layer.

Although this method shows a slight improvement in the durability of the electrode catalyst layer, the durability is still insufficient in severe start-stop tests for use in actual applications.

### [Citation List]

### [Patent Literature]

PTL 1: JP H05-129023 A
PTL2: JP 2011-3552 A

### [Summary of the Invention]

### [Technical Problem]

The present invention focuses on the above points, and aims to provide an electrode catalyst layer that suppresses degradation due to repeated starting and stopping and has excellent durability, and a membrane electrode assembly using the electrode catalyst layer.

### [Solution to Problem]

In order to solve the above problems, the electrode catalyst layer according to one aspect of the present invention is an electrode catalyst layer used in a polymer fuel electrolyte fuel cell, which contains carbon particles which support catalyst, a polymer electrolyte, and a fiber material which is at least one of a carbon fiber and an organic electrolyte fiber, and the thickness of the electrode catalyst layer after performing a start-stop test from 1 V to 1.5 V for 10,000 cycles is 70% or more of the thickness of the electrode catalyst layer before the start-stop test.

The membrane electrode assembly according to one aspect of the present invention is a membrane electrode assembly using the catalyst layer.

### [Advantageous Effects of the Invention]

According to one aspect of the present invention, it is possible to provide an electrode catalyst layer and a membrane electrode assembly with excellent durability by suppressing degradation due to repeated starting and stopping.

### [Brief Description of the Drawings]

Fig. 1 is an exploded perspective view of an internal structure for a polymer electrolyte fuel cell according to an embodiment of the present invention.
Fig. 2 is a view for describing a structure of a membrane electrode assembly for a polymer electrolyte fuel cell according to an embodiment of the present invention.

### [Description of the Embodiment]

An embodiment of the present invention will be described below with reference to the drawings.

It should be noted that the present invention is not limited to the embodiments described below but may be modified in design or the like based on the knowledge of a skilled person, and such modifications are also encompassed by the scope of the present invention.

In the following detailed description, specific details will be explained to provide a complete understanding of the embodiments of the present invention. It is clear, however, that one or more embodiments can be implemented without such details. To simplify the drawings, known structures or devices may be schematically illustrated.

### [Configuration of Polymer Electrolyte Fuel Cell]

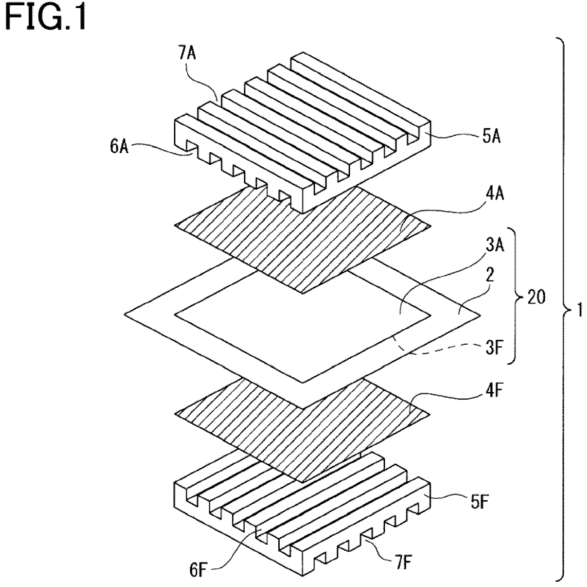

With reference to Fig. 1, a specific configuration example of a polymer electrolyte fuel cell 1 including a membrane electrode assembly 20 according to the present embodiment will be described. Fig. 1 is an exploded perspective view of a configuration example of the polymer electrolyte fuel cell 1 that includes the membrane electrode assembly 20. Although Fig. 1 shows a configuration example of a single cell, the polymer electrolyte fuel cell 1 is not limited to this configuration and may have a configuration in which multiple single cells are laminated.

As shown in Fig. 1, a polymer electrolyte membrane 2 constituting a polymer electrolyte fuel cell 1 has a pair of electrode catalyst layers 3A and 3F disposed on respective surfaces of the polymer electrolyte membrane 2 facing each other with the polymer electrolyte membrane 2 interposed therebetween. A gas diffusion layer 4A is arranged on the surface of the electrode catalyst layer 3A facing away from the polymer electrolyte membrane 2. A gas diffusion layer 4F is arranged on the surface of the electrode catalyst layer 3F facing away from the polymer electrolyte membrane 2. The gas diffusion layers 4A and 4F are arranged to face each other across the polymer electrolyte membrane 2 and a pair of electrode catalyst layers 3A and 3F. A membrane electrode assembly 20 includes a polymer electrolyte membrane 2, and electrode catalyst layers 3A and 3F attached to respective sides of the polymer electrolyte membrane 2. Although details will be described later, the electrode catalyst layers 3A and 3F according to the present embodiment contain carbon particles which support catalyst (catalyst-supporting carbon particles), a polymer electrolyte, and fiber materials of at least one of carbon fibers and organic electrolyte fibers.

In the polymer electrolyte fuel cell 1, the gas diffusion layer 4A has a first surface and a second surface opposed to the first surface. The first surface faces the electrode catalyst layer 3A. A separator 5A has a first major surface and a second major surface. The first major surface faces the second surface of the gas diffusion layer 4A and has formed therein gas flow paths 6A through which reaction gas flows. The second major surface has formed therein cooling water paths 7A through which cooling water passes. The separator 5A is disposed at the first major surface thereof on the second surface of the gas diffusion layer 4A. Additionally, in the polymer electrolyte fuel cell 1, the gas diffusion layer 4F has a first surface and a second surface opposed to the first surface. The first surface faces the electrode catalyst layer 3F. A separator 5F has a first major surface and a second major surface. The first major surface faces the second surface of the gas diffusion layer 4F and has formed therein gas flow paths 6F through which reaction gas flows. The second major surface has formed therein cooling water paths 7F through which cooling water passes. The separator 5F is disposed at the first major surface thereof on the second surface of the gas diffusion layer 4F. Hereinafter, the electrode catalyst layer 3A and the electrode catalyst layer 3F may be simply referred to as "electrode catalyst layer 3" when there is no need to distinguish between them. One of the electrode catalyst layers 3 provided on respective surfaces of the polymer electrolyte membrane in the present embodiment (e.g., electrode catalyst layer 3A) is an anode electrode catalyst layer, and the other one (e.g., electrode catalyst layer 3F) is a cathode electrode catalyst layer.

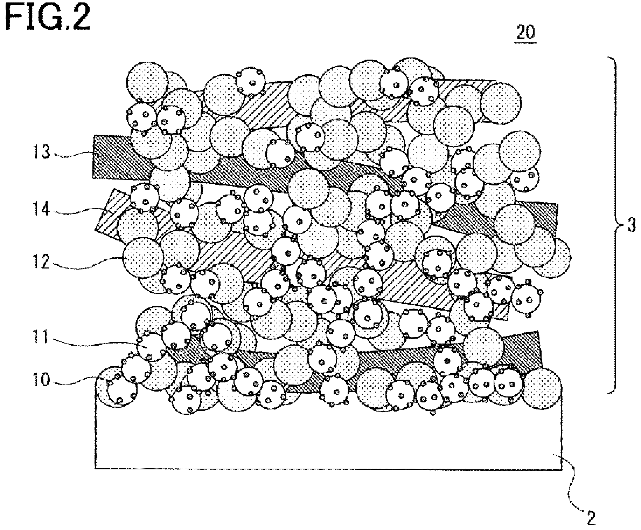

Fig. 2 is a schematic cross-sectional view showing a configuration example of the membrane electrode assembly and the electrode catalyst layer according to the present embodiment. As shown in Fig. 2, electrode catalyst layers 3 according to the present embodiment are attached to both surfaces of the polymer electrolyte membrane 2. The electrode catalyst layer 3 is composed of a catalyst 10, carbon particles 11 as a conductive carrier, a polymer electrolyte 12, a carbon fiber 13, and an organic electrolyte fiber 14. Portions of the electrode catalyst layer 3 where none of the catalyst 10, the carbon particles 11, the polymer electrolyte 12, the carbon fiber 13, and the organic electrolyte fiber 14 are present are holes.

### [Production of Catalyst Ink]

Next, a method of producing catalyst ink for forming electrode catalyst layer according to the present embodiment will be described. The catalyst ink for forming the electrode catalyst layer is used for forming the electrode catalyst layer 3 (electrode catalyst layer for the polymer electrolyte fuel cell) of the polymer electrolyte fuel cell 1.

First, to obtain a catalyst particle slurry, the carbon particles 11 forming the catalyst-supporting carbon particles carrying the catalyst 10 and the polymer electrolyte 12 are mixed and dispersed in a dispersion medium (in a solvent).

Examples of the catalyst 10 include metals and alloys of the following metals, and oxides, complex oxides, and carbides of these substances. Examples of these metals include platinum group elements (platinum, palladium, ruthenium, iridium, rhodium, and osmium), iron, lead, copper, chromium, cobalt, nickel, manganese, vanadium, molybdenum, gallium, and aluminum.

The carbon particles 11 may be any type as long as they are conductive and can support catalyst without being affected by the catalyst. However, generally, carbon particles are used.

As a dispersion medium (solvent), any one of water or alcohols such as methanol, ethanol, 1-propanol, 2-propanol, 1-butanol, 2-butanol, isobutyl alcohol, tert-butyl alcohol, and pentanol can be used. Further, as the dispersion medium, it is also possible to use a dispersion medium in which two or more of the above dispersion mediums are mixed. For mixing and dispersing, for example, bead mills, planetary mixers, and dissolvers can be used.

Any material can be used for the polymer electrolyte membrane 2 and the polymer electrolyte 12, as long as the material has proton conductivity, and fluorine-based polymer electrolytes and hydrocarbon-based polymer electrolytes can be used. The fluorine-based polymer electrolyte may be a polymer electrolyte having a tetrafluoroethylene backbone such as "Nafion (registered trademark)" manufactured by Du Pont. The polymer electrolyte 12 is in a state where the polymer electrolyte is aggregated.

Next, a fiber material which is at least one of the carbon fiber 13 and organic electrolyte fiber 14 is added to the catalyst particle slurry produced by the above method, and mixed and dispersed to obtain a catalyst ink. For mixing and dispersing, for example, bead mills, planetary mixers, and dissolvers can be used.

Examples of the carbon fibers 13 include carbon fibers, carbon nanotubes and carbon nanohorns. In the present embodiment, only one selected from among these three types of fiber materials may be used as carbon fiber 13 alone, or two or more types of fiber materials may be used together.

The polymer electrolyte 12 and the polymer electrolyte constituting the organic electrolyte fiber 14 may be the same material or different from each other. The polymer electrolyte constituting each of the polymer electrolyte 12 and the organic electrolyte fiber 14, and the polymer electrolyte constituting the polymer electrolyte films 2 may be the same or different from each other.

### (Production of Membrane Electrode Assembly)

The membrane electrode assembly 20 is produced by attaching the electrode catalyst layer 3 formed of the above catalyst ink to respective surfaces of the polymer electrolyte membrane 2.

One method of attaching the electrode catalyst layer 3 to the polymer electrolyte membrane 2 is, for example, using a transfer substrate having an electrode catalyst layer in which a catalyst ink is applied to the transfer substrate, and bringing the surface of the electrode catalyst layer of the transfer substrate having an electrode catalyst layer into contact with the polymer electrolyte membrane 2, and then applying heat and pressure to the electrode catalyst layer 3 and the polymer electrolyte membrane 2. Additionally, the membrane electrode assembly 20 can also be produced by a method in which a solvent component (dispersion medium) is removed from the coating film of the catalyst ink after the catalyst ink is directly applied to the surface of the polymer electrolyte membrane 2.

Catalyst-supporting carbon particles are susceptible to corrosion due to repeated starting and stopping (potential change). Accordingly, in an electrode catalyst layer that does not contain fiber material, for example, if the start-stop test (potential cycle test) of 1 V to 1.5 V is performed for 10,000 cycles, corrosion of the catalyst-supporting carbon particles progresses, and the thickness of the electrode catalyst layer after the start-stop test decreases significantly with respect to the thickness of the electrode catalyst layer before the start-stop test. For example, if the thickness of the electrode catalyst layer after the start-stop test is less than 70% of the thickness of the electrode catalyst layer before the start-stop test, the Electrochemical Surface Area (ECSA) of the catalyst is significantly reduced, resulting in a significant reduction in power generation performance.

In contrast, the electrode catalyst layer 3 produced by the above method is formed of catalyst-supporting carbon particles (carbon particles 11), a polymer electrolyte 12, and a fiber material (carbon fiber 13, organic electrolyte fiber 14). Fiber materials are less likely to deteriorate due to repeated starting and stopping. More specifically, the electrode catalyst layer 3 according to the present embodiment contains a fiber material, which makes it difficult for the film thickness to decrease due to corrosion of the electrode material even when starting and stopping are repeated. Therefore, even when the catalyst-supporting carbon particles are corroded by repeated starting and stopping, and platinum is eluted, the eluted platinum adheres to the fiber material that is not corroded, thereby suppressing degradation of power generation performance.

For example, even after performing the start-stop test from 1 V to 1.5 V for 10,000 cycles, thickness reduction of the electrode catalyst layer 3 according to the present embodiment is reduced. Specifically, the thickness of the electrode catalyst layer 3 according to the present embodiment after performing start-stop test for 10,000 cycles is 70% or more of the thickness before the start-stop test. Accordingly, deterioration due to repeated starting and stopping can be suppressed, and a membrane electrode assembly 3 having excellent durability can be provided.

In the present embodiment, the thickness of the electrode catalyst layer 3 is preferably 20 µm or less. If the thickness is thicker than 20 µm, cracking can occur. Furthermore, when used in fuel cells, the diffusivity and conductivity of gases and generated water may decrease, resulting in reduced power output.

In the present embodiment, the carbon fiber 13 preferably contains at least one of a carbon fiber, a carbon nanotube, and a carbon nanohorn. These fiber materials are resistant to corrosion and have high conductivity, which can more reliably reduce the degradation of power generation performance. In the present embodiment, only one of these three types of carbon fibers 13 may be used alone, or two or more may be used together.

When the organic electrolyte fiber 14 is used as the fiber material in the electrode catalyst layer 3 according to the present embodiment, the average fiber diameter of the organic electrolyte fiber 14 is preferably 2 µm or less. When the average fiber diameter is 2 µm or less, appropriate thinness for a fiber material contained in the electrode catalyst layer can be ensured.

In order to improve the output of the polymer electrolyte fuel cell 1, it is desired that the gas supplied to the electrode catalyst layer 3 is suitably diffused into the electrode catalyst layer 3 through the holes in the electrode catalyst layer 3, and that the water generated by the electrode reaction is appropriately discharged through the holes, particularly in the air electrode. The presence of the hole facilitates the formation of the interface between the gas, the catalyst-supporting carbon particles (carbon particles 11), and the polymer electrolyte 12, and promotes the electrode reaction, thereby improving the output of the polymer electrolyte fuel cell 1.

From the above viewpoints, the electrode catalyst layer 3 preferably has the holes of an appropriate size and amount. When the average fiber diameter of the polymer electrolyte fibers 14 is 2 µm or less, sufficient gaps are formed in the structure in which the polymer electrolyte fibers 14 are entangled with each other in the electrode catalyst layer 3, and thus sufficient holes are ensured. Accordingly, the output of the polymer electrolyte fuel cell 1 can be improved.

The average fiber length of the polymer electrolyte fibers 14 is preferably larger than the average fiber diameter and preferably in the range of 1 µm or more and 200 µm or less. When the average fiber length is within the above range, aggregation of the polymer electrolyte fibers 14 in the electrode catalyst layer 3 is reduced, which facilitates formation of the holes.

If the ratio of the mass of the fiber material (carbon fiber 13 and organic electrolyte fiber 14) to the mass of carbon particles 11 is too small, durability against repeated starting and stopping may not be maintained. On the other hand, an excessive ratio of the mass of the fiber material to the mass of the carbon particles 11 may reduce the output. Accordingly, the ratio of the mass of the fiber material to the mass of the carbon particles 11 is preferably in the range of 0.3 or more and 1.5 or less.

If the ratio of the mass of the polymer electrolyte 12 to the mass of the carbon particles 11 is too small, proton conduction may not be carried out properly and resistance may increase, and thus power output may decrease. On the other hand, when the ratio of the mass of the polymer electrolyte 12 to the mass of the carbon particles 11 is excessive, the water generated during power generation is easily retained, and this water accelerates corrosion of the electrode catalyst layer 3, which may reduce durability against repeated starting and stopping.

Accordingly, the ratio of the mass of the polymer electrolyte 12 to the mass of the carbon particles 11 is preferably in the range of 0.5 or more and 1.0 or less.

### (Advantageous effects of the present embodiment)

The electrode catalyst layer 3 according to the present embodiment is an electrode catalyst layer used in a polymer fuel electrolyte fuel cell, which contains carbon particles which support catalyst, a polymer electrolyte, and a fiber material which is at least one of a carbon fiber and an organic electrolyte fiber, and the thickness of the electrode catalyst layer after performing the start-stop test from 1 V to 1.5 V for 10,000 cycles is 70% or more relative to the thickness of the electrode catalyst layer before the start-stop test.

With such a configuration, even when the catalyst-supporting carbon particles are corroded by repeated starting and stopping, and platinum is eluted, the eluted platinum adheres to the fiber material that is not corroded, thereby suppressing degradation of power generation performance. Accordingly, deterioration due to repeated starting and stopping can be prevented, and a membrane electrode assembly having excellent durability can be provided.

In the membrane electrode assembly 20 according to the present embodiment, the electrode catalyst layer 3 according to the present embodiment is used.

With such a configuration, deterioration due to repeated starting and stopping can be suppressed, and a membrane electrode assembly with excellent durability can be provided.

Examples and comparative examples of the present invention will now be described. However, the present invention is not limited only to these examples.

### (Example 1)

Example 1 of the present invention will be described below.

### [Production of Catalyst Ink]

Catalyst-supporting carbon particles (trade name: TEC10E50E, manufactured by TANAKA Kikinzoku Kogyo K.K.) supporting 50 wt% platinum and a dispersion of polymer electrolyte (trade name: Nafion dispersion, manufactured by FUJIFII,M Wako Pure Chemical Corporation) were mixed with water in a planetary mixer to prepare a catalyst particle slurry.

Carbon fibers (Trade name: VGCF-H, manufactured by Showa Denko K.K.) and 1-propanol were added to the above catalyst particle slurry, and dispersed by a bead mill disperser to obtain a catalyst ink.

At this time, the ratio of the mass of the fiber material (carbon fiber) to the mass of the carbon particles was 0.5 for both the catalyst ink for the cathode electrode catalyst layer and the catalyst ink for the anode electrode catalyst layer.

The ratio of the mass of the polymer electrolyte to the mass of the carbon particles was 0.8 for both the catalyst ink for the cathode electrode catalyst layer and the catalyst ink for the anode electrode catalyst layer.

### (Production of Membrane Electrode Assembly)

The above catalyst ink was then applied directly to both sides of the polymer electrolyte membrane by the die-coating method to obtain a membrane electrode assembly having a cathode electrode catalyst layer and an anode electrode catalyst layer on respective surfaces of the polymer electrolyte membrane. At this time, the catalyst ink was applied to the electrode catalyst layer so that the thickness of the cathode electrode catalyst layer was 15 µm and the thickness of the anode electrode catalyst layer was 10 µm.

### (Evaluation of Example 1)

Using the membrane electrode assembly of Example 1, the start-stop (potential-cycle) test from 1 V to 1.5 V was performed for 10,000 cycles. The start-stop tests were performed as described in "Cell Evaluation and Analysis Protocol", a booklet published by the New Energy and Industrial Technology Development Organization (NEDO). After the start-stop tests, the thickness of each electrode catalyst layer in Example 1 was measured by SEM (Scanning Electron Microscope).

As a result, each electrode catalyst layer in Example 1 after the start-stop test maintained a thickness of 90% of the film thickness before the start-stop test, and the membrane electrode assembly in Example 1 showed good power generation performance even after the start-stop test.

### (Example 2)

Example 2 of the present invention will be described below.

Polymer electrolyte fibers, not carbon fibers, were added to the catalyst ink as a fiber material. Other than that, the electrode catalyst layer and the membrane electrode assembly in Example 2 were obtained by the same process as in Example 1.

Polymer electrolyte fibers were prepared by forming a polymer electrolyte dispersion (Nafion dispersion: manufactured by FUJIFII,M Wako Pure Chemical Corporation) into a fibrous state using the electrospinning method, followed by cooling and pulverizing. The average fiber diameter of the polymer electrolyte fibers was 150 nm and the average fiber length was 10 µm.

Using the membrane electrode assembly of Example 2, the start-stop test from 1 V to 1.5 V was performed for 10,000 cycles as in Example 1, and then the film thickness of each electrode catalyst layer (cathode electrode catalyst layer, anode electrode catalyst layer) of Example 2 was measured by SEM. As a result, each electrode catalyst layer in Example 2 after the start-stop test maintained a thickness of 85% of the film thickness before the start-stop test, and the membrane electrode assembly in Example 2 showed good power generation performance even after the start-stop test.

### (Example 3)

Example 3 of the present invention will be described below.

The ratio of the mass of the carbon fiber to the mass of the carbon particles was 0.3 for the catalyst ink for the cathode electrode catalyst layer and 1.0 for the catalyst ink for the anode electrode catalyst layer. Other than that, the electrode catalyst layer and the membrane electrode assembly in Example 3 were obtained by the same process as in Example 1.

Using the membrane electrode assembly of Example 3, the start-stop test from 1 V to 1.5 V was performed for 10,000 cycles as in Example 1, and then the film thickness of each electrode catalyst layer (cathode electrode catalyst layer, anode electrode catalyst layer) of Example 3 was measured by SEM. As a result, each electrode catalyst layer in Example 3 after the start-stop test maintained a thickness of 85% of the film thickness before the start-stop test, and the membrane electrode assembly in Example 3 showed good power generation performance even after the start-stop test.

### (Example 4)

Example 4 of the present invention will be described below.

The ratio of the mass of the polymer electrolyte to the mass of the carbon particles was 0.6 for the catalyst ink for the cathode electrode catalyst layer and 1.0 for the catalyst ink for the anode electrode catalyst layer. Other than that, the electrode catalyst layer and the membrane electrode assembly in Example 4 were obtained by the same process as in Example 1.

Using the membrane electrode assembly of Example 4, the start-stop test from 1 V to 1.5 V was performed for 10,000 cycles as in Example 1, and then the film thickness of each electrode catalyst layer (cathode electrode catalyst layer, anode electrode catalyst layer) of Example 4 was measured by SEM. As a result, each electrode catalyst layer in Example 4 after the start-stop test maintained a thickness of 80% of the film thickness before the start-stop test, and the membrane electrode assembly in Example 4 showed good power generation performance even after the start-stop test.

### (Comparative Example 1)

No fiber material (carbon fiber, polymer electrolyte fiber) was added to the catalyst ink. Other than that, the electrode catalyst layer and the membrane electrode assembly in Comparative Example 1 were obtained by the same process as in Example 1 above.

Using the membrane electrode assembly of Comparative Example 1, the start-stop test from 1 V to 1.5 V was performed for 10,000 cycles as in Example 1, and then the film thickness of each electrode catalyst layer (cathode electrode catalyst layer, anode electrode catalyst layer) of Comparative Example 1 was measured by SEM. As a result, each electrode catalyst layer in Comparative Example 1 after the start-stop test was reduced to 30% of the film thickness before the start-stop test, and the membrane electrode assembly in Comparative Example 1 did not have good power generation performance after the start-stop test.

### (Comparative Example 2)

At this time, the catalyst ink was applied to the electrode catalyst layer so that the thickness of the cathode electrode catalyst layer was 25 µm and the thickness of the anode electrode catalyst layer was 10 µm. Other than that, the electrode catalyst layer and the membrane electrode assembly in Comparative Example 2 were obtained by the same process as in Example 1 above.

In the membrane electrode assembly of Comparative Example 2, the initial power generation performance was greatly reduced.

### (Comparative Example 3)

The ratio of the mass of the carbon fiber to the mass of the carbon particles was 0.1 for the catalyst ink for the cathode electrode catalyst layer and 0.2 for the catalyst ink for the anode electrode catalyst layer. Other than that, the electrode catalyst layer and the membrane electrode assembly in Comparative Example 3 were obtained by the same process as in Example 1 above.

Using the membrane electrode assembly of Comparative Example 3, the start-stop test from 1 V to 1.5 V was performed for 10,000 cycles as in Example 1, and then the film thickness of each electrode catalyst layer (cathode electrode catalyst layer, anode electrode catalyst layer) of Comparative Example 3 was measured by SEM. As a result, each electrode catalyst layer in Comparative Example 3 after the start-stop test was reduced to 60% of the film thickness before the start-stop test, and the membrane electrode assembly in Comparative Example 3 did not have good power generation performance after the start-stop test.

### (Comparative Example 4)

The ratio of the mass of the polymer electrolyte to the mass of the carbon particles was 1.2 for the catalyst ink for the cathode electrode catalyst layer and 1.0 for the catalyst ink for the anode electrode catalyst layer. Other than that, the electrode catalyst layer and the membrane electrode assembly in Comparative Example 4 were obtained by the same process as in Example 1 above.

Using the membrane electrode assembly of Comparative Example 4, the start-stop test from 1 V to 1.5 V was performed for 10,000 cycles as in Example 1, and then the film thickness of each electrode catalyst layer (cathode electrode catalyst layer, anode electrode catalyst layer) of Comparative Example 4 was measured by SEM. As a result, each electrode catalyst layer in Comparative Example 4 after the start-stop test was reduced to 65% of the film thickness before the start-stop test, and the membrane electrode assembly in Comparative Example 4 did not have good power generation performance after the start-stop test.

Table 1 shows the composition and evaluation results of the catalytic inks for Examples 1 to 4 and Comparative Examples 1 to 4. The "film thickness ratio (%) before and after the start-stop test" in Table 1 indicates the ratio of the film thickness of each electrode catalyst layer after the start-stop test to the film thickness of each electrode catalyst layer before the startup and shutdown test. In Table 1, the absence of fiber material in the catalyst ink and the fact that the film thickness of the electrode catalyst layer was not measured after the start-stop test are indicated by "-".

**[Table 1]**

| | Cathode electrode catalyst layer | | | | Anode electrode catalyst layer | | | | Evaluation result |
|---|---|---|---|---|---|---|---|---|---|
| | Composition of catalyst ink | | | Film thickness (µm) | Composition of catalyst ink | | | Film thickness (µm) | Film thickness ratio of before and after start-stop test (%) |
| | Fiber material | Mass ratio to carbon particles | | | Fiber material | Mass ratio to carbon particles | | | |
| | | Fiber material | Polymer electrolyte | | | Fiber material | Polymer electrolyte | | |
| Example 1 | Carbon fiber | 0.5 | 0.8 | 15 | Carbon fiber | 0.5 | 0.8 | 10 | 90 |
| Example 2 | Polymer electrolyte fiber | 0.5 | 0.8 | 15 | Polymer electrolyte fiber | 0.5 | 0.8 | 10 | 85 |
| Example 3 | Carbon fiber | 0.3 | 0.8 | 15 | Carbon fiber | 1.0 | 0.8 | 10 | 85 |
| Example 4 | Carbon fiber | 0.5 | 0.6 | 15 | Carbon fiber | 0.5 | 1.0 | 10 | 80 |
| Comparative Ex. 1 | - | - | 0.8 | 15 | - | - | 0.8 | 10 | 30 |
| Comparative Ex. 2 | Carbon fiber | 0.5 | 0.8 | 25 | Carbon fiber | 0.5 | 0.8 | 10 | - |

As shown in Table 1, the thickness of each electrode catalyst layer (cathode electrode catalyst layer and anode electrode catalyst layer) in Examples 1 to 4 after the start-stop test was 70% or more of the thickness before the start-stop test. In other words, the electrode catalyst layer and the membrane electrode assembly in each Example showed excellent durability, suppressing degradation due to repeated starting and stopping.

The electrode catalyst layer and the membrane electrode assembly of the present invention is not limited to the above embodiments and examples, but various modifications may be made within the range not impairing the features of the invention.

### [Reference Signs List]

1 Polymer electrolyte fuel cell
2 Polymer electrolyte membrane
3, 3A, 3F Electrode catalyst layer
10 Catalyst
11 Carbon particle
12 Polymer electrolyte
13 Carbon fibers
14 Organic electrolyte fiber
20 Membrane electrode assembly

## Claims

1. An electrode catalyst layer for use in a polymer fuel electrolyte fuel cell, the electrode catalyst layer comprising:
carbon particles which support catalyst;
a polymer electrolyte; and
a fiber material which is at least one of a carbon fiber and an organic electrolyte fiber, wherein
a thickness of the electrode catalyst layer after performing a start-stop test from 1 V to 1.5 V for 10,000 cycles is 70% or more of a thickness of the electrode catalyst layer before the start-stop test.

2. The electrode catalyst layer according to claim 1, wherein the electrode catalyst layer has a thickness of 20 µm or less.

3. The electrode catalyst layer according to claim 1 or 2, wherein the carbon fiber contains at least one of a carbon fiber, a carbon nanotube, and a carbon nanohorn.

4. The electrode catalyst layer according to any one of claims 1 to 3, wherein the organic electrolyte fiber has an average fiber diameter of 2 µm or less, and an average fiber length in a range of 1 µm or more and 200 µm or less.

5. The electrode catalyst layer according to any one of claims 1 to 4, wherein a ratio of a mass of the fiber material to a mass of the carbon particles is in a range of 0.3 or more and 1.5 or less.

6. The electrode catalyst layer according to any one of claims 1 to 5, wherein a ratio of a mass of the polymer electrolyte to a mass of the carbon particles is in a range of 0.5 or more and 1.0 or less.

7. A membrane electrode assembly wherein the membrane electrode assembly uses the electrode catalyst layer according to any one of claims 1 to 6.
